# EUROPÄISCHE PATENTSCHRIFT

(11) **EP 1 117 519 B1**
(45) Veröffentlichungstag und Bekanntmachung des Hinweises auf die Patenterteilung: **05.02.2003**
(21) Anmeldenummer: 98958223.4
(22) Anmeldetag: 28.09.1998
(51) Int. Cl.: B29C 44/12, B29C 33/16

(54) **VERFAHREN ZUM HERSTELLEN EINES SCHAUMKÖRPERTEILES, INSBESONDERE EINES POLSTERSCHAUMTEILES FÜR EINEN FAHRZEUGSITZ, UND HAFTVERSCHLUSSTEIL ZUR VERWENDUNG IN DEM VERFAHREN**
PROCESS FOR PRODUCING FOAMED ARTICLES, ESPECIALLY FOAMED ARTICLES FOR UPHOLSTERING CAR SEATS, AND TOUCH FASTENING COMPONENT FOR USE IN THE PROCESS
PROCEDE POUR PRODUIRE UNE PIECE MOUSSEE, NOTAMMENT UNE PIECE MOUSSEE DE REMBOURRAGE POUR UN SIEGE DE VEHICULE, ET ELEMENT DE FIXATION PAR CONTACT UTILISE DANS LE PROCEDE

(43) Veröffentlichungstag der Anmeldung: 25.07.2001
(73) Patentinhaber: Gottlieb Binder GmbH & Co., 71088 Holzgerlingen (DE)
(72) Erfinder: POULAKIS, Konstantinos, D-01896 Pulsnitz (DE)
(74) Vertreter: Bartels, Martin Erich Arthur
(86) Internationale Anmeldenummer: EP9806141
(87) Internationale Veröffentlichungsnummer: WO00018556

(56) Entgegenhaltungen:
- WO-A-86/03164
- US-A- 5 654 070

## Beschreibung

Die Erfindung bezieht sich auf ein Verfahren zum Herstellen eines Schaumkörperteiles, insbesondere eines Polsterschaumteiles, für einen Fahrzeugsitz, das mit mindestens einem Haftverschlußteil mit Haftelementen versehen wird, die von einer schaumabhaltenden Abdeckung mit ferromagnetischen Bestandteilen abgedeckt in einer das Schaumkörperteil erzeugenden Einschäumform aufgenommen werden, wobei die Abdeckung durch das Haftverschlußteil selbst gebildet wird, das mit einer in der Breite vorgebbaren Randabdeckung über den Flächenbereich mit den Haftelementen überstehend angeordnet und mit einer Halteeinrichtung in lösbarer Anlage mit der Einschäumform gebracht wird.

Die Erfindung bezieht sich zudem auf ein Haftverschlußteil gemäß dem Oberbegriff des Anspruchs 7.

Schaumkörperteile mit eingeschäumten Haftverschlußteilen finden bevorzugt Anwendung als Polsterschaumteile für Sitzelemente, Rückenlehnen oder Kopfstützen, insbesondere bei Fahrzeugsitzen. Die Haftelemente der eingeschäumten Haftverschlußteile dienen hierbei in der Regel dazu, Überzugstoffe, die mit Haftverschlußteilen mit korrespondierenden Haftelementen versehen sind, am betreffenden Polsterschaumteil zu befestigen.

Um die Funktionsfähigkeit der Haftverschlußteile sicherzustellen, ist es beim Einschäumvorgang wesentlich, daß die Haftelemente mittels der schaumabhaltenden Abdeckung gegen ein Eindringen des Schaummaterials sicher geschützt sind, so daß ein Verkleben der Haftelemente vermieden ist. In bekannter Weise kann zu diesem Zweck so vorgegangen werden, daß das Haftverschlußteil an der Vorderseite, an der die Haftelemente freiliegen, mit einem die Haftelemente vollflächig bedeckenden Deckelement in Form einer Lage aus einer Dichtmasse bedeckt wird, die nach dem Einschäumvorgang zur Freilegung der Haftelemente wieder abziehbar ist.

Bei einem in der EP 0 612 485 A1 aufgezeigten, bekannten Haftverschlußteil findet hierbei als Dichtmasse ein thermoplastisches Kunststoffmaterial Verwendung, das nach dem Abziehen einschmelzbar und wiederverwendbar ist.

Trotz Verwendung einer recycelbareh Dichtmasse ist dieses Vorgehen wegen der zusätzlichen Arbeitsschritte für das Aufbringen des Dichtelementes, das Abziehen und der wegen der Wiederverwendung erforderlichen Maßnahmen sehr aufwendig.

Durch die US-A-5,654,070 ist ein gattungsgemäßes Verfahren bekannt. Bei dem gattungsgemäßen Verfahren zum Herstellen eines Schaumkörperteiles besteht die Abdeckung aus zwei ferromagnetischen Längsstreifen, die auf der randseitigen Unterseite des Haftverschlußteiles aufgeklebt werden. Die dahingehenden Abdeckrandstreifen können dann in Verbindung gebracht werden mit Magneteinrichtungen der Einschäumform, um derart in schaumabdichtender Weise Haftelemente in einer Ausnehmung der Einschäumform festlegen zu können. Damit das bekannte Haftverschlußteil beim Einschäumvorgang sich nicht von der Einschäumform löst, ist darüber hinaus vorgesehen, daß ferromagnetische Halteklammern in vorgebbaren Längsabständen voneinander angeordnet das Haftverschlußteil in etwa mittig durchgreifen, um derart mit einem weiteren Haltemagnet der Einschäumform zusammenzuwirken, der unterhalb der Ausnehmung angeordnet ist. Da beim Einschäumen ein hohes Maß an Sauberkeit erforderlich ist, ist die Einschäumform selbst nach einer vorgebbaren Anzahl von Einschäumvorgängen abzureinigen, wobei das Reinigen der Ausnehmung innerhalb der Einschäumform aufgrund ihrer Vertiefung gegenüber den sonstigen glatten Oberflächen zeitlich aufwendig und mithin kostenintensiv ist, da die Einschäumform nicht sofort wieder für den Fertigungsprozeß zur Verfügung steht.

Durch die WO-A-86/03164 ist ein vergleichbares Verfahren bekannt, bei dem ein Metallstreifen als ferromagnetisches Haftteil in einen mehrschichtig aufgebauten Haftverschluß mittels Ultraschall eingeschweißt wird. Wird das derart bekannte Haftverschlußteil in einer Ausnehmung innerhalb der Einschäumform angeordnet, wird der Metallstreifen über die in der Ausnehmung mittig angeordnete Magnet- oder Halteeinrichtung festgehalten und beiderseits der Formausnehmung in der Einschäumform liegt das bekannte Haftverschlußteil mit seinen randseitigen Abdeckungen auf der Formwandoberseite und diese übergreifend auf. Die eigentlichen Verschlußelemente des Haftverschlußteiles, die vom Schaummaterial freizuhalten sind, damit sie später ungestört in Eingriff gebracht werden können mit einem zugeordneten Haftverschlußmaterial des Polsterbezugstoffes od. dgl., sind dann wieder, wie beim vorbeschriebenen Stand der Technik, innerhalb der Ausnehmung angeordnet und die Schlaufenelemente auf der Rückseite des Haftverschlußteiles, die dort durchgängig angeordnet sind, erlauben einen verbesserten Eingriff des Schaummaterials und mithin einen verbesserten Halt des Haftverschlußteiles mit dem zu formenden Schaumkörper. Auch bei der dahingehenden Lösung ist der erhöhte Reinigungsaufwand nachteilig im Hinblick auf die vorgesehene Ausnehmung in der Einschäumform.

Ausgehend von diesem Stand der Technik liegt der Erfindung die Aufgabe zugrunde, ein Verfahren aufzuzeigen, daß die Herstellung von Schaumkörperteilen mit eingeschäumten Haftverschlußteilen auf vergleichsweise einfachere und wirtschaftlichere Weise ermöglicht.

Diese Aufgabe ist erfindungsgemäß durch ein Verfahren der eingangs genannten Art gelöst, das dadurch gekennzeichnet ist, daß die Haftelemente in einer Ebene mit der Randabdeckung des Haftverschlußteiles in Anlage mit der Einschäumform angeordnet werden und daß die ferromagnetischen Bestandteile als integrierter Teil des Haftverschlußteiles ausgebildet oder als Schichten auf seiner Vorder- und/oder Rückseite aufgetragen werden. Hierdurch läßt sich die Einschäumform ohne Vertiefung ausbilden, da die Hartelemente auf einer Ebene der Einschäumform aufliegend in einer Ebene mit der Randabdeckung des Haftverschlußteiles angeordnet sind. Bei den anstehenden Reinigungsarbeiten für die Einschäumform kann auf das aufwendige Abreinigen der Formvertiefungen völlig verzichtet werden und die Einschäumform steht schnell wieder für den eigentlichen Herstellungsprozeß zur Verfügung. Da die ferromagnetischen Bestandteile auch in Form aufgetragener Schichten nur geringfügig das Haftverschlußteil verbreitern, baut auch die Randabdeckung konstruktiv nur klein auf und läßt sich in unmittelbare Anlage mit den magnetfelderzeugenden Halteelementen der Einschäumform bringen.

Die Erfindung schließt auch ein Haftverschlußteil gemäß den Anspruch 7 ein, der in dem erfindungsgemäßen Verfahren verwendet wird.

Weitere vorteilhafte Ausführungsformen sind Gegenstand der abhängigen Ansprüche.

Nachstehend ist die Erfindung anhand der Zeichnung im einzelnen erläutert.

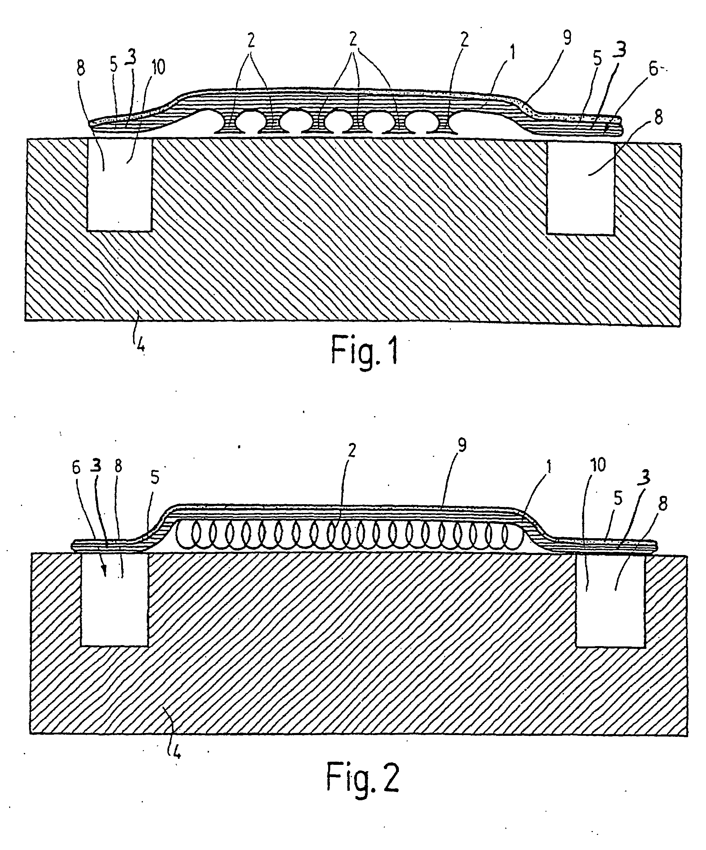

Es zeigen die
- Fig.1 und 2: eine jeweils schematisch vereinfacht und endseitig geschnitten gezeichnete Stirnansicht der Einschäumform mit einzuschäumendem Haftverschlußteil.

Das jeweilige Haftverschlußteil 1 nach den Figuren dient insbesondere dem Einschäumen bei Polsterteilen von Fahrzeugsitzen (nicht dargestellt) bei deren Herstellung. Das bandartige Haftverschlußteil 1, das jedoch auch sonstige flächenmäßige Geometrien ausbilden kann, weist auf der einen Seite Haftelemente 2 auf zum Verbinden mit korrespondierenden Haftelementen eines anderen Haftverschlußteiles (nicht dargestellt) unter Bildung eines üblichen Haftverschlusses. Auf diese Art und Weise lassen sich dann über den jeweiligen Haftverschluß Polster und Polsterbezugmaterialien am geschäumten Fahrzeugsitz lösbar festlegen.

Das in den Figuren dargestellte Haftverschlußteil 1 wird über ein übliches Verfahren hergestellt, wie es beispielsweise durch die DE 196 46 318.1 gezeigt ist. Die Haftelemente 2 sind gemäß der Darstellung nach der Fig.1 aus pilzartigen Stengeln gebildet, die an ihrem freien Ende tellerförmig verbreitert sind. Die Haftelemente 2 können aber auch, wie dies die Fig.2 zeigt, aus in üblicher Weise herzustellenden Schlingen bestehen, die dem Eingriff von hakenförmigen Haftelementen (nicht dargestellt) des korrespondierenden Haftverschlußteiles zum Herstellen eines Haftverschlusses dienen.

Wie die Figuren des weiteren zeigen, wird das jeweilige Haftverschlußteil 1 mit seinen Haftelementen 2 von einer schaumabhaltenden Abdeckung 3 abgedeckt in einer das Schaumkörperteil (nicht dargestellt) erzeugenden Einschäumform 4 aufgenommen, die in den Figuren nur im wesentlichen hälftig als Teil eines Formkastens dargestellt ist. Gemäß der Erfindung wird die Abdeckung 3 durch das Haftverschlußteil 1 selbst gebildet, das mit einer in der Breite vorgebbaren Randabdeckung 5 unter Ausbildung einer Dichtfläche über den Flächenbereich mit den Haftelementen 2 überstehend angeordnet und mit einer Halteeinrichtung, die als Ganzes mit 6 bezeichnet ist, in lösbarer Anlage mit der Einschäumform 4 gebracht wird.

Wie die Figuren zeigen, werden dabei die Haftelemente 2 in einer Ebene mit der Randabdeckung 5 des Haftverschlußteiles 1 in Anlage mit der Einschäumform 4 angeordnet, so daß sich der Flächenbereich mit den Haftelementen 2 in Blickrichtung auf die Figuren gesehen nach oben hin vorstehend auswölbt. Die angesprochene Ebene bezieht sich dabei auf die stirnseitigen Anlageflächen von Haftverschlußteilen 1 mit ihren Haftelementen 2.

Zumindest die Randabdeckung 5 des Haftverschlußteiles 1, vorzugsweise jedoch das gesamte Haftverschlußteil in seiner Breite und Länge, weist ferromagnetische Bestandteile auf und wird als der eine Teil der Halteeinrichtung 6 benutzt, deren der Einschäumform 4 zugehöriger anderer Teil durch an dieser angeordnete magnetfelderzeugende Halteelemente 8 gebildet wird, an denen unter Bildung einer Schaumbarriere oder Dichtlippe die Randabdeckung 5 beim Einschäumvorgang gehalten wird. Die Randabdekkung 5 ist zumindest aus zwei Längsrändern des Haftverschlußteiles 1 gebildet, die frei von den Haftelementen 2 zwischen sich mit dem Flächenbereich mit den Haftelementen 2 versehen sind. Vorzugsweise umfaßt jedoch die Randabdeckung 5 vollständig in der Art einer Rechteckform den Flächenbereich mit den Haftelementen 2 nach allen Seiten hin.

Die angesprochenen ferromagnetischen Bestandteile können als integrierter Teil des Haftverschlußteiles ausgebildet oder als Schichten auf seiner Vorder- und/oder Rückseite aufgetragen werden. Vorzugsweise wird dabei die jeweilige Beschichtung über ein Sol-Gel-Verfahren erhalten oder aus einem Haftgrundmittel gebildet.

Ein dahingehendes Sol-Gel-Verfahren, das bei der Herstellung von Haftverschlußteilen 1 eingesetzt wird, ist in der PCT/EP 98/03055 beschrieben. Die über das Sol-Gel-Verfahren erhaltene Schicht 9 ist nanokompositär aufgebaut, wobei das Sol-Gel auf der Basis von SiO₂- und/oder TiO₂-modifiziertem SiO₂ ausgewählt wird. Damit die dahingehende Schicht 9 ferromagnetische Eigenschaften aufweist, wird das Sol-Gel mit Ferrit oder einem ferrithaitigen Material des Aufbaues FeₓOy gemischt. Ferner kann für den Erhalt eines ferromagnetischen Sol-Gels Magnetit ausgefällt werden. Die Schicht 9 kann dabei durch Foulardieren, Tauchen, Sprühen, Begießen, Aufdampfen, Auflaminieren oder Aufrakeln sowie Kaschieren auf das Haftverschlußteil 1 aufgetragen werden.

Die jeweilige Schicht 9 kann aber auch aus einem Haftgrundmittel aus Resorcin und/oder mindestens einem seiner Derivate bestehen. Insbesondere kann die dahingehende Schicht aus einem Haftgrundmittel eine Ferromagnetika enthaltende Polyurethanschicht darstellen, wobei es sich beispielsweise um das Polyurethan SU 9182 der Firma Stahl handein kann. Ein dahingehendes Haftgrundmittel ist in der PCT/EP 98/02886 beschrieben.

Die Magnetfelder erzeugenden Halteelemente 8 der Einschäumform 4 sind aus Permanentmagneten, beispielsweise in Form von in der Einschäumform 4 oder in deren Formteilen (Pfeifen) eingelegten Magnetleisten 10 oder Stabmagneten (nicht dargestellt) gebildet. Durch die Magnetkraft der dahingehenden Halteelemente 8 werden die jeweiligen Haftverschlußteile 1 mit ihren ferromagnetischen Eigenschaften oder mit ihren dahingehenden Schichten während des Einschäumvorganges in fester Anlage und Position innerhalb der Einschäumform 4 gehalten, wobei die jeweilige Abdeckung 3 unter Bildung einer Dichtfläche oder Schaumbarriere im Bereich der jeweiligen Randabdeckung 5 das schädliche Eindringen des Schaummaterials in die Haftelemente 2 mit Sicherheit vermeidet. Eventuelle zusätzliche Abdekkungen auf der Rückseite des Haftverschlußteiles 1 oder in Form einer Dichtmasse unmittelbar für die Haftelemente 2 sind somit vermieden. Wie die Figuren zeigen, können die Randabdeckungen 5 im Bereich der Magnetleisten 10 enden oder in ihren Randabmessungen darüber hinausreichen und eine verlängerte Dichtstrecke ausbilden. Die angesprochenen Schichten 9 können darüber hinaus, insbesondere wenn sie auf der Rückseite des jeweiligen Haftverschlußteiles 1 angeordnet sind, das der Einschäumform 4 abgewandt ist, den Einschäumvorgang derart verbessern, daß es zu einer sicheren Einschäumung des Haftverschlußteiles 1 in dem Polyurethanschaummaterial des Kraftfahrzeugpolsterteiles kommt.

Das Haftverschlußteil 1 besteht insbesondere aus einem Polyamid oder aus einem Polyolefinmaterial. Bei dem bekannten Herstellverfahren nach der DE 196 46 318 A1 wird zur Herstellung des Haftverschlußteiles 1 mit seiner Vielzahl von einstückig ausgebildeten Haftelementen 2 in Form von Verdickungen aufweisenden Stengeln ein thermoplastischer Kunststoff in plastischem oder flüssigem Zustand einem Spalt zwischen einer Druckwalze und einer Formwalze zugeführt, wobei die Formwalze mit nach außen und innen offenen Hohlräumen versehen ist und beide Walzen in entgegengesetztem Drehsinn angetrieben werden. Die Formwalze weist dabei ein Sieb auf, dessen Hohlräume durch Ätzen oder mittels eines Lasers hergestellt worden sind, wobei die Haftverschlußelemente allein dadurch entstehen, daß der thermoplastische Kunststoff in den offenen Hohlräumen des Siebes der Formwalze erhärtet. Die Verdickungen der angesprochenen einzelnen Stengel werden in Form von abgeflachten oder konkave Vertiefungen aufweisenden Pilzköpfen ausgebildet.

Nach anderen bekannten Verfahren lassen sich die Schlingen als Haftelemente 2 gemäß der Darstellung nach der Fig.2 herstellen. Bei dem angesprochenen Formwalzenverfahren lassen sich jedenfalls sehr kleine einzelne Haftelemente 2 herstellen, deren Größe durchaus im Nanometerbereich liegen kann. Anstelle des angesprochenen Kunststoffmaterials kann das Haftverschlußteil 1 auch aus textilen oder sonstigen Kunststoffmaterialien gebildet werden, beispielsweise unter Einsatz üblicher Strick- und Wirktechniken. Sofern diese mit ferromagnetischen Beschichtungen versehen werden, läßt sich gleichfalls eine abdichtende Schaumbarriere erreichen. Nach Durchführen des Einschäumvorganges läßt sich das geschäumte Teil, insbesondere Polsterteil, mit dem in ihm eingeschäumten Haftverschlußteil 1 ohne weiteres aus der Einschäumform 4 entfernen unter Überwindung der Haltekräfte der in der Einschäumform angeordneten Halteelemente 8. Die Einschäumform 4 steht dann wieder für einen erneuten Einschäumvorgang zur Verfügung. Die Haftelemente 2 des derart eingeschäumten Haftverschlußteiles 1 liegen dann auf jeden Fall zur Umgebung hin frei und weisen kein Schaummaterial auf, das ihre Funktionsfähigkeit beeinträchtigen könnte.

Bei der Realisierung der Abdichtung über das Haftverschlußteil 1 selbst gegen das Schaummaterial sind keine Zusatzstoffe oder Zusatzdichtungen, wie aufgesetzte Dichtlippen od. dgl., möglich, sondern die Abdichtung erfolgt allein durch die planparallele Anlage von Oberflächen des Haftverschlußbandes mit entsprechenden Anlageflächen der Einschäumform. Dabei kann die Randabdeckung 5 des Haftverschlußteiles 1, die die Abdichtung herstellt, in der Art einer Folie oder zumindest sehr dünnwandig ausgebildet sein.

## Patentansprüche

1. Verfahren zum Herstellen eines Schaumkörperteiles, insbesondere eines Polsterschaumteiles, für einen Fahrzeugsitz, das mit mindestens einem Haftverschlußteil (1) mit Haftelementen (2) versehen wird, die von einer schaumabhaltenden Abdeckung (3) mit ferromagnetischen Bestandteilen abgedeckt in einer das Schaumkörperteil erzeugenden Einschäumform (4) aufgenommen werden, wobei die Abdeckung (3) durch das Haftverschlußteil (1) selbst gebildet wird, das mit einer in der Breite vorgebbaren Randabdeckung (5) über den Flächenbereich mit den Haftelementen (2) überstehend angeordnet und mit einer Halteeinrichtung (6) in lösbarer Anlage mit der Einschäumform (4) gebracht wird, **dadurch gekennzeichnet, daß** die Haftelemente (2) in einer Ebene mit der Randabdekkung (5) des Haftverschlußteiles (1) in Anlage mit der Einschäumform (4) angeordnet werden und daß die ferromagnetischen Bestandteile als integrierter Teil des Haftverschlußteiles (1) ausgebildet oder als Schichten (9) auf seiner Vorder- und/oder Rückseite aufgetragen werden.

2. Verfahren nach Anspruch 1, **dadurch gekennzeichnet, daß** zumindest die Randabdeckung (5) des Haftverschlußteiles (1) ferromagnetische Bestandteile aufweist und als der eine Teil der Halteeinrichtung (6) benutzt wird, deren der Einschäumform (4) zugehöriger anderer Teil durch an dieser angeordnete magnetfelderzeugende Halteelemente (8) gebildet wird, an denen unter Bildung einer Schaumbarriere die Randabdeckung (5) beim Einschäumvorgang gehalten wird.

3. Verfahren nach Anspruch 1 oder 2, **dadurch gekennzeichnet, daß** die Randabdeckung (5) zumindest aus zwei Längsrändern des Haftverschlußteiles (1) gebildet wird, die frei von Haftelementen (2) zwischen sich mit dem Flächenbereich mit den Haftelementen (2) versehen werden.

4. Verfahren nach einem der Ansprüche 1 bis 3, **dadurch gekennzeichnet, daß** die jeweilige Schicht (9) über ein Sol-Gel-Verfahren erhalten oder aus einem Haftgrundmittel gebildet wird.

5. Verfahren nach einem der Ansprüche 2 bis 4, **dadurch gekennzeichnet, daß** die magnetfelderzeugenden Halteelemente (8) der Einschäumform (4) aus Permanentmagneten beispielsweise in Form von in der Einschäumform (4) oder in deren Formteilen eingelegte Magnetleisten (10) oder Stabmagneten gebildet werden.

6. Verfahren nach einem der Ansprüche 1 bis 5, **dadurch gekennzeichnet, daß** das Haftverschlußteil (1) aus einem Polyamid- oder aus einem Polyolefin-Material oder zumindest teilweise aus textilen Materialien gebildet wird.

7. Haftverschlußteil (1) zur Verwendung in dem Verfahren nach einem der Ansprüche 1 bis 6, wobei das Haftverschlußteil (1) Haftelemente (2) aufweist, die von einer schaumabhaltenden Abdeckung (3) mit ferromagnetischen Bestandteilen abgedeckt sind die eine über den Flächenbereich mit den Haftelementen (2) überstehende Randabdeckung (5) bildet, **dadurch gekennzeichnet, daß** sich in der durch das Zusammenwirken der ferromagnetischen Eigenschaften der Abdeckung (3) und der Einschäumform (4) erhältlichen lösbaren Anlage des Haftverschlußteiles (1) mit der Einschäumform (4) die Haftelemente (2) in einer Ebene mit der Randabdeckung (5) befinden, und daß die ferromagnetischen Bestandteile als integrierter Teil des Haftverschlußteiles (1) oder als auf seiner Vorder- und/oder Rückseite aufgetragene Schichten ausgebildet sind.

## Claims

1. A process for producing a foamed part, especially an foamed upholstery part for a car seat which has at least one adhesive closing part (1) with adhesive elements (2) which are held in a foaming mould (4) generating the foamed part covered by a foam-protecting cover (3) with ferromagnetic components, whereby the cover (3) is constituted by the adhesive closing part (1) itself with a lateral cover (5), the width of which can be chosen to suit, overlapping the surface area on which the adhesive elements (2) are arranged and are in releasable contact with the foaming mould (4), **characterised in that** the adhesive elements (2) are arranged on one plane with the lateral cover (5) of the adhesive closing part (1) in contact with the foaming mould (4) and **in that** the ferromagnetic components are in the form of an integral part of the adhesive closing part (I) or are applied as layers (9) on its front and/or back.

2. A process according to claim 1, **characterised in that** at least the lateral cover (5) of the adhesive closing part (1) has ferromagnetic components and is used as a part of the fixing device (6), the other part of which associated with the foaming mould (4) is formed by the holding elements (8) generating magnetic fields at which the lateral cover (5) is held during the foaming process.

3. A process according to claim 1 or 2, **characterised in that** the lateral cover (5) is formed by two longitudinal edges of the adhesive closing part (1) which having no adhesive elements (2) between them are provided with the surface area with the adhesive elements (2).

4. A process according to one of the claims 1 to 3, **characterised in that** the respective layer (9) is obtained by the Sol-Gel method or is formed of an adhesive primer.

5. A process according to one of the claims 2 to 4, **characterised in that** the holding elements (8) of the foaming mould (4) are made of permanent magnets for example in the form of magnetic bars (10) or bar magnets inserted into the foaming mould (4) or its parts.

6. A process according to one of the claims 1 to 5, **characterised in that** the adhesive closing part (1) is made of a polyamide or polyolefin material or at least partly of textile materials.

7. Adhesive closing part (1) for using in the process according to one of the claims 1 to 6, whereby the adhesive closing part (1) has adhesive elements (2) covered by a foam-protecting cover (3) with ferromagnetic components, which forms a lateral cover (5) overlapping the surface area on which the adhesive elements (2) are arranged, **characterised in that**, with the detachable contact between the adhesive closing part (1) and the foaming mould (4) achievable by the interaction of the ferromagnetic properties of the cover (3) and the foaming mould (4), the adhesive elements (2) are in one plane with the lateral cover (5), and **in that** the ferromagnetic components are formed as an integral part of the adhesive closing part (1) or as layers applied to its front and/or back.

## Revendications

1. Procédé de fabrication d'un corps en mousse synthétique, en particulier une pièce de rembourrage en mousse pour un siège de véhicule automobile, qui comprend une pièce de blocage par adhérence (1) munie d'éléments d'adhérence (2), qui, protégés par un couvercle (3) destiné à retenir la mousse et contenant des éléments ferromagnétiques, sont introduits dans un moule d'expansion destiné à la fabrication du corps en mousse synthétique, le couvercle (3) étant formé par la pièce de blocage par adhérence (1) elle-même, qui est disposée sur la surface munie des éléments d'adhérence (2) et s'avance au-delà de celle-ci par un couvercle de bordure (5), dont la largeur peut être prédéfinie, et qui est mise en appui amovible sur le moule d'expansion (4) au moyen d'un dispositif de retenue (6), **caractérisé en ce que** les éléments d'adhérence (2) sont disposés dans le même plan que le couvercle de bordure (5) de la pièce de blocage par adhérence (1) en appui sur le moule d'expansion (4) et **en ce que** les éléments ferromagnétiques forment une partie intégrante de la pièce de blocage par adhérence (1) ou sont déposés en couches (9) sur la face avant et/ou la face arrière de celle-ci.

2. Procédé selon la revendication 1, **caractérisé en ce qu'**au moins le couvercle de bordure (5) de la pièce de blocage par adhérence (1) contient des éléments ferromagnétiques et est conçu comme une partie du dispositif de retenue (6), dont l'autre partie, associée au moule d'expansion (4), est formée par des éléments de retenue (8) générant un champ magnétique et agencés contre ladite partie, lesquels sont destinés à maintenir le couvercle de bordure (5) pendant le processus d'expansion en formant un barrage pour la mousse.

3. Procédé selon la revendication 1 ou 2, **caractérisé en ce que** le couvercle de bordure (5) est formé par au moins deux bords longitudinaux de la pièce de blocage par adhérence (1), qui ne sont pas munis d'éléments d'adhérence (2) et entre lesquels est disposée la surface munie des éléments d'adhérence (2).

4. Procédé selon une des revendications 1 à 3, **caractérisé en ce que** chaque couche (9) est obtenue par un procédé sol-gel ou est formée par une substance pour couche passivante.

5. Procédé selon une des revendications 2 à 4, **caractérisé en ce que** les éléments de retenue (8) du moule d'expansion (4), qui génèrent un champ magnétique, sont formés par des aimants permanents constitués, par exemple, par des barreaux magnétiques (10) ou aimants droits insérés dans le moule d'expansion (4) ou dans les cavités de moulage de celui-ci.

6. Procédé selon une des revendications 1 à 5, **caractérisé en ce que** la pièce de blocage par adhérence (1) est formée par un matériau en polyamide ou par un matériau en polyoléfine ou au moins en partie par des matériaux textiles.

7. Pièce de blocage par adhérence (1) destinée à être utilisée dans le procédé selon une des revendications 1 à 6, la pièce de blocage par adhérence (1) étant munie d'éléments d'adhérence (2), qui sont protégés par un couvercle (3) destiné à retenir la mousse et contenant des éléments ferromagnétiques, lequel forme un couvercle de bordure (5) s'avançant au-delà de la surface munie des éléments d'adhérence (2), **caractérisée en ce que**, lorsque la pièce de blocage par adhérence (1) est mise en appui amovible sur le moule d'expansion (4) sous l'effet de l'action conjointe des propriétés ferromagnétiques du couvercle (3) et du moule d'expansion (4), les éléments d'adhérence (2) sont situés dans le même plan que le couvercle de bordure (5), et **en ce que** les éléments ferromagnétiques sont conçus comme une partie intégrante de la pièce de blocage par adhérence (1) ou sont déposés en couches sur la face avant et/ou la face arrière de celle-ci.
